# EUROPÄISCHE PATENTSCHRIFT

(11) **EP 1 443 181 B1**
(45) Veröffentlichungstag und Bekanntmachung des Hinweises auf die Patenterteilung: **23.03.2011**
(21) Anmeldenummer: 04001647.9
(22) Anmeldetag: 27.01.2004
(51) Int. Cl.: F01D 15/06, F01D 5/14, F01D 1/22, F01D 1/06

(54) **Turbinenrad zum Antrieb schnell rotierender Werkzeuge**
Turbine wheel for high speed rotary tools
Roue de turbine pour outils rotatifs à grande vitesse

(30) Priorität: 30.01.2003 DE 10303617
(43) Veröffentlichungstag der Anmeldung: 04.08.2004
(73) Patentinhaber: GAT Gesellschaft für Antriebstechnik mbH, 65201 Wiesbaden (DE)
(72) Erfinder: Schmitt, Bernhard, 65185 Wiesbaden (DE)
(74) Vertreter: Lieke, Winfried

(56) Entgegenhaltungen:
- EP-A- 0 984 136
- GB-A- 1 474 134
- US-A1- 2002 038 827
- DOTY F D ET AL INSTITUTE OF ELECTRICAL AND ELECTRONICS ENGINEERS: "HIGH-EFFICIENCY MICROTURBINE TECHNOLOGY" AEROSPACE POWER SYSTEMS, CONVERSION TECHNOLOGIES. BOSTON, AUG. 4 - 9, 1991, PROCEEDINGS OF THE INTERSOCIETY ENERGY CONVERSION ENGINEERING CONFERENCE, NEW YORK, ANS/IEEE, US, Bd. VOL. 2 CONF. 26, 4. August 1991 (1991-08-04), Seiten 436-442, XP000280527 ISBN: 0-89448-163-0

## Beschreibung

Die vorliegende Erfindung betrifft ein Turbinenrad zum Antrieb schnell rotierender Werkzeuge, insbesondere für die rotierenden Teller und/oder Glocken von Farbsprüheinrichtungen, mit einer um eine Achse drehbar gelagerten Kreisscheiben- oder ringförmigen Trägerplatte und darauf in Form eines Kranzes angeordneten Turbinenschaufeln, die achsparallele Vorderflächen und Rückflächen aufweisen und die in radialer Richtung, das heißt senkrecht zur Achse des Turbinenrades, gekrümmt verlaufen, wobei die Vorderflächen mindestens abschnittsweise einen kleineren Krümmungsradius haben als ein entsprechender Abschnitt der Rückflächen.

Unter Vorderflächen werden dabei die in Rotationsrichtung des Turbinenrades vorderen Flächen der Turbinenschaufeln verstanden und die Rückflächen sind dementsprechend die Flächen der Schaufeln, die in Rotationsrichtung des Turbinenrades hinten liegen.

Ein derartiges Turbinenrad ist aus der GB 1474134 bekannt, wenn man davon ausgeht, dass die Vorder- und Rückseite der darin beschriebenen und dargestellten Turbinenschaufeln achsparallel verlaufen. Dabei befasst sich die GB 1474134 speziell mit dem Problem, das durch eine rotierende Turbine erzeugte Geräusch zu reduzieren und die Effizienz der speziellen Gestaltung von Gaszufuhrkanälen zu verbessern.

Eine weitere, ähnliche Turbine ist bekannt aus der EP 0 984 136, welche ein spezielles System von Leitschaufeln aufweist.

Die US-Patentanmeldung 2002/0038827 beschreibt ebenfalls eine Turbine, die ähnlich wie die Turbine der vorliegenden Erfindung für Farbsprühanlagen vorgesehen ist, konzentriert sich jedoch speziell auf eine entsprechende Spindel und beschreibt keine Details der Turbinenradschaufeln.

In dem Dokument von Doty et al. in "proceedings of the intersociety energy conversion egineering conference" ANS/IEEE, US, Vol. 2, Conf. 26 Seiten 438- 439 vom 4. August 1991 wird eine Mikroturbine beschrieben, die speziell für die schnelle Rotation von NMR-Proben ausgelegt ist und die an ihrem Außenumfang axial bewußt kurz gehaltene und in einer Seitenansicht keilförmig verjüngte Turbinenschaufeln aufweist. Unterschiede der Krümmung der Vorder- und Rückflächen der Turbinenschaufeln werden in diesem Dokument nicht beschrieben.

Turbinenräder der eingangs genannten Art sind u.a. für Lackierungsanlagen bekannt, bei welchen Farbsprühglocken, die mit einem Farblack beaufschlagt werden, durch derartige Turbinen in schnelle Rotation versetzt werden, so daß die auf die Glocke aufgebrachte Farbe bzw. der betreffende Lack aufgrund der schnelleren Rotation der Glocke in kleinste Tröpfchen zerstäubt wird und sich auf einer zu lackierenden bzw. mit Farbe zu versehenden Oberfläche niederschlägt. Die für eine möglichst feine Zerstäubung erforderlichen Rotationsgeschwindigkeiten der rotierenden Farbglocken betragen bis zu 70.000 U.p.M. und die entsprechenden Turbinen sind aus diesem Grund luftgelagert. Derartige Turbinen-Lacksprühanlagen finden vor allem Verwenden bei der Lackierung von Fahrzeugkarosserien.

Dabei hängt die erreichbare Turbinendrehzahl selbstverständlich auch von der Farb- bzw. Lackmenge ab, mit welcher die Sprühglocke oder ein entsprechender Sprühteller beaufschlagt werden. Der auf die Sprühglocke nachgeführte Lack muß jeweils durch die Sprühglocke beschleunigt werden und hat deshalb selbstverständlich einen bremsenden Effekt. Um daher die Drehzahl der Turbine nicht übermäßig zu reduzieren, was wiederum einen nachteiligen Effekt auf die Gleichmäßigkeit und Feinheit der Tröpfchenbildung hätte, ist demzufolge die auf die Glocke pro Zeiteinheit aufzubringende Farb- bzw. Lackmenge begrenzt, und zwar herkömmlich auf etwa 400- 450 ml pro Minute.

Der Erfinder der vorliegenden Anmeldung hat sich daher die Aufgabe gestellt, eine Turbine bzw. ein Turbinenrad zu schaffen, welches ohne größere Neukonstruktionen und mit höchstens geringfügigen Änderungen in die herkömmlichen Turbinengehäuse passt, bei den erforderlichen hohen Drehzahlen ein noch höheres Drehmoment hat als die bekannten Turbinenräder, so daß ohne nachteiligen bremsenden Effekt eine größere Lackmenge auf die Sprühglocke bzw. einen Sprühteller aufgebracht werden kann, so daß gegebene, zu lackierende Flächen in noch kürzerer Zeit mit einer gleichmäßigen Lackschicht versehen werden können.

Diese Aufgabe wird durch ein Turbinenrad gemäß des Anspruchs 1 gelöst.

Diese Aufgabe wird dadurch gelöst, daß die radial äußeren Abschnitte sowohl an der Vorderfläche als auch an der Rückfläche der Turbinenschaufeln eine stärkere Krümmung bzw. einen kleineren Krümmungsradius aufweisen als die radial weiter innen liegenden Abschnitte der Vorder- und der Rückfläche. Gleichzeitig wird jedoch die Achsparallelität der Vorderflächen und der Rückflächen der Turbinenschaufeln beibehalten, wobei die radial inneren Abschnitte der Vorderflächen bzw. Rückflächen mindestens 30 % der radialen Erstreckung einer Turbinenschaufel erfassen und die radial äußeren Abschnitte der Vorderflächen bzw. Rückflächen ebenfalls mindestens 30 der radialen Erstreckung der Turbinenschaufeln erfassen, wobei die axiale Länge einer Turbinenschaufel mindestens 60% der radialen Erstreckung der entsprechenden Turbinenschaufel beträgt.

Mit anderen Worten, die einzelnen Turbinenschaufeln haben über ihre axiale Länge hinweg ein konstantes Profil, was es insbesondere möglich macht, entsprechende Profile in großen Längen herzustellen, die einem Vielfachen der axialen Länge einer einzelnen Turbinenschaufel entsprechen und die einzelnen Turbinenschaufeln jeweils durch Abschneiden bzw. Abtrennen eines entsprechenden Abschnittes von diesem Profil herzustellen. Dies ermöglicht eine außerordentlich rationelle Fertigung. Bei einer solchen Fertigung stellt es auch kein nennenswertes Problem dar, wenn die radial äußeren Abschnitte der Turbinenschaufeln, das heißt die Abschnitte, die bei dem fertig hergestellten Turbinenrad vom Zentrum des Turbinenrades entfernt liegen, jeweils einen kleineren Krümmungsradius und damit eine stärkere Krümmung aufweisen als die radial inneren Abschnitte der Turbinenschaufeln, und zwar sowohl auf der Vorderseite wie auf der Rückseite der Turbinenschaufeln.

Es hat sich herausgestellt, daß ein solches Profil der Turbinenschaufeln offenbar weniger störende Wirbel erzeugt und zu einem runderen und gleichmäßigeren Lauf eines Turbinenrades mit einem stabilen Drehmoment führt.

Gleichzeitig ermöglicht es die Turbinenschaufelgestaltung offenbar, auch die axiale Länge der Schaufeln zu vergrößern. Bei herkömmlichen Turbinenschaufeln dieser Art, die für luftgelagerte Turbinen hoher Drehzahl (70.000 U.p.M.) hergestellt und verwendet werden, liegt die axiale Länge der Turbinenschaufeln nur bei etwa 50% der radialen Erstreckung der Turbinenschaufeln, das heißt der Differenz zwischen Außenradius und Innenradius des Schaufelkranzes.

Erfindungsgemäß ist dagegen vorgesehen, daß die axiale Länge einer Turbinenschaufel mindestens 60% und vorzugsweise mehr als 65% der radialen Erstreckung der entsprechenden Turbinenschaufel beträgt. Als zweckmäßig und gut beherrschbar hat sich eine axiale Länge der Schaufeln bewährt, die bei etwa 70% der radialen Erstreckung der Schaufel liegt. Nach Möglichkeit sollte ein Wert von 80%, höchstens aber etwa 100%, für die axiale Länge der Schaufeln im Vergleich zu ihrer radialen Erstreckung nicht überschritten werden.

Das Verhältnis der radialen Erstreckung der Schaufeln bzw. des Schaufelkranzes, das heißt konkret die Differenz zwischen Außenradius und Innenradius des Schaufelkranzes, im Verhältnis zu dem Radius des Turbinenrades (der mit dem Außenradius des Schaufelkranzes gleichzusetzen ist) beträgt etwa 20%.

Grundsätzlich gilt, daß bei den Turbinenschaufeln die Vorderfläche mindestens entlang eines Abschnittes derselben einen kleineren Krümmungsradius hat als der entsprechende, gegenüberliegende Abschnitt der Rückfläche. Gleichzeitig hat aber auch der radial äußere Abschnitt jeder Turbinenschaufel sowohl auf der Außenfläche wie auf der Innenfläche einen kleineren Krümmungsradius als der entsprechende innere Abschnitt dieser Flächen.

Auch wenn beispielsweise der äußere Abschnitt auf der Vorderfläche einen kleineren Krümmungsradius hat als der äußere Abschnitt der Rückfläche, so hat aber dennoch der radial innere Abschnitt der Vorderfläche einen größeren Krümmungsradius als der radial äußere Abschnitt der Rückfläche.

In der bevorzugten Ausführungsform der Erfindung liegen die Krümmungsradien der inneren Abschnitte der Vorderfläche und der Rückfläche relativ dicht beieinander, das heißt der Krümmungsradius der Rückfläche ist in dem radial inneren Abschnitt vorzugsweise zwischen 0 und 10% größer als der Krümmungsradius des inneren Abschnittes der Vorderfläche.

Die radial äußeren Abschnitte der Vorderfläche und der Rückfläche unterscheiden sich im allgemeinen etwas deutlicher, und zwar typischerweise um einen Wert zwischen 10% und 50%, bezogen auf den kleineren Radius des äußeren Abschnittes der Vorderfläche, das heißt der Krümmungsradius des inneren Abschnittes der Rückfläche ist um 10 bis 50% größer. Als zweckmäßig hat sich für diesen Krümmungsradius der Rückflächen ein etwa 30% größerer Krümmungsradius gegenüber dem Krümmungsradius des äußeren Abschnittes der Rückfläche erwiesen.

Die Krümmungsmittelpunkte des inneren und äußeren Abschnittes der Vorderfläche liegen, bezogen auf die Turbinenradachse, jeweils in einem etwas größeren Abstand zur Turbinenradachse als die Krümmungsmittelpunkte der jeweils entsprechenden Abschnitte der Rücklächen, wobei außerdem die Krümmungsmittelpunkte der radial inneren Abschnitte von der Turbinenachse beide weiter entfernt liegen als die beiden Krümmungsmittelpunkte der jeweiligen radial äußeren Abschnitte der Vorder- und der Rückfläche.

Die jeweils unterschiedlich gekrümmten Abschnitte der Vorderfläche und auch der Rückfläche gehen vorzugsweise glatt, das heißt ohne Sprung oder Knick (d. h. mit einer stetigen ersten Ableitung) ineinander über. Dies erreicht man am einfachsten dadurch, daß der Übergangspunkt genau an die Position gelegt wird, die von der Verbindungslinie durch die Krümmungsmittelpunkte des jeweiligen äußeren und inneren Abschnittes geschnitten wird.

Wie bereits erwähnt, ist die Turbinenschaufel so gestaltet, daß, bezogen auf die radiale Erstreckung der Turbinenschaufel, der radial innere Abschnitt sowohl der Vorderfläche als auch der Rückfläche jeweils mindestens 30% dieser radialen Erstreckung erfaßt und daß umgekehrt auch der radial äußere Abschnitt der Vorderfläche und der Rückfläche, der mit jeweils gegenüber dem inneren Abschnitt kleinerem Krümmungsradius definiert ist, jeweils mindestens 30% der radialen Erstreckung der Schaufel umfaßt. In der Praxis stellt sich heraus, daß es zweckmäßig ist, wenn jeder der radial inneren bzw. äußeren Abschnitte sowohl der Vorderfläche als auch der Rückfläche jeweils in etwa 50% der radialen Erstreckung der Turbinenschaufel umfaßt. Dabei sind allerdings die Winkelbereiche, über welche die jeweiligen inneren und äußeren Abschnitte sich erstrecken, deutlich voneinander verschieden, was unter anderem auch mit den unterschiedlichen Krümmungsradien zusammenhängt, da der Winkelbereich, über welchen ein gegebener, gekrümmter Abschnitt sich erstreckt, jeweils auf seinen Krümmungsmittelpunkt bezogen wird. Als vorteilhaft hat es sich dabei erwiesen, wenn der Winkelbereich, über welchen der radial innere Abschnitt der Rückfläche sich erstreckt, zwischen 28 und 40°, vorzugsweise zwischen 30 und 35° und insbesondere bei etwa 33° liegt, und der Krümmungswinkel des radial äußeren Abschnittes der Rückfläche im Bereich zwischen 60 und 90°, vorzugsweise bei 70° ± 5°, liegt. Auf der Vorderfläche sind die entsprechenden Winkelbereiche etwas größer, da die Krümmungsradien dort kleiner sind und wegen der stärkeren Krümmung gleichzeitig der Weg von der Innenkante zur Außenkante auf der Vorderfläche der Turbinenschaufeln länger ist als auf der Rückseite. Demzufolge beträgt der Winkel, über welchen der radial innere Abschnitt der Vorderfläche sich erstreckt, zwischen 30 und 45°, vorzugsweise etwa 40° ± 2°, und der Winkelbereich, über welchen sich der radial äußere Abschnitt der Vorderfläche erstreckt, beträgt zwischen 100 und 130°, vorzugsweise 115° ± 5°. Dies ist jeweils auf den Krümmungsmittelpunkt des betreffenden gekrümmten Abschnittes zu beziehen.

Weiterhin hat es sich als besonders zweckmäßig und für die Turbinenleistung günstig erwiesen, wenn die Turbinenschaufeln aus einer exakt radialen Ausrichtung ihrer Verbindungslinie von Innen- und Außenkante nach vorn verkippt sind, und zwar in der Weise, daß die radial äußere Kante der Turbinenschaufel der inneren Kante in Rotationsrichtung etwas voranläuft. Als zweckmäßig hat es sich dabei erwiesen, wenn der Winkel zwischen der Verbindungslinie von äußerer und innerer Kante einer Turbinenschaufel um einen Winkel zwischen 5 und 12°, vorzugsweise um etwa 8° bis -1° gegenüber dem auf die Innenkante der Turbinenschaufel weisenden Radiusvektor des Turbinenrades geneigt ist.

Bei einer bevorzugten Ausführungsform der Erfindung beträgt außerdem die Teilung, das heißt der Abstand zwischen aufeinanderfolgenden Turbinenschaufeln in Umfangsrichtung, 10° bis 15°, insbesondere etwa 12°, wobei dieser Abstand jeweils zwischen entsprechenden Punkten der benachbarten Turbinenschaufeln zu messen ist. Dies bedeutet, daß die Gesamtzahl der in Form eines Kranzes am Außenumfang des Turbinenrades angeordneten Turbinenschaufel zwischen 24 und 36 bzw. bei 30 liegt.

Die Innenkante und die Außenkante einer Turbinenschaufel sind jeweils durch einen kleinen Radius abgerundet, wobei die Innenkante etwas scharfkantiger ist als die Außenkante und z.B. einen Krümmungsradius von weniger als 0,1, vorzugsweise von weniger als 0,05 mm, z. B. 0,025 mm, aufweist, wohingegen die äußere Kante einen Krümmungsradius von weniger als 0,3, vorzugsweise von weniger als 0,2 mm, jedoch größer als 0,1 mm, hat.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: eine Draufsicht auf ein Turbinenrad entlang der Achse mit einem entlang des Au- ßenumfanges des Rades angeordneten Kranz von Turbinenschaufeln,
- Figur 2: eine Schnittansicht des in Figur 1 dargestellten Turbinenrades, und zwar mit einem Schnitt entlang der Linie II-II in Figur 1,
- Figur 3: einen Ausschnitt aus Figur 1 mit einer einzelnen Turbinenschaufel.

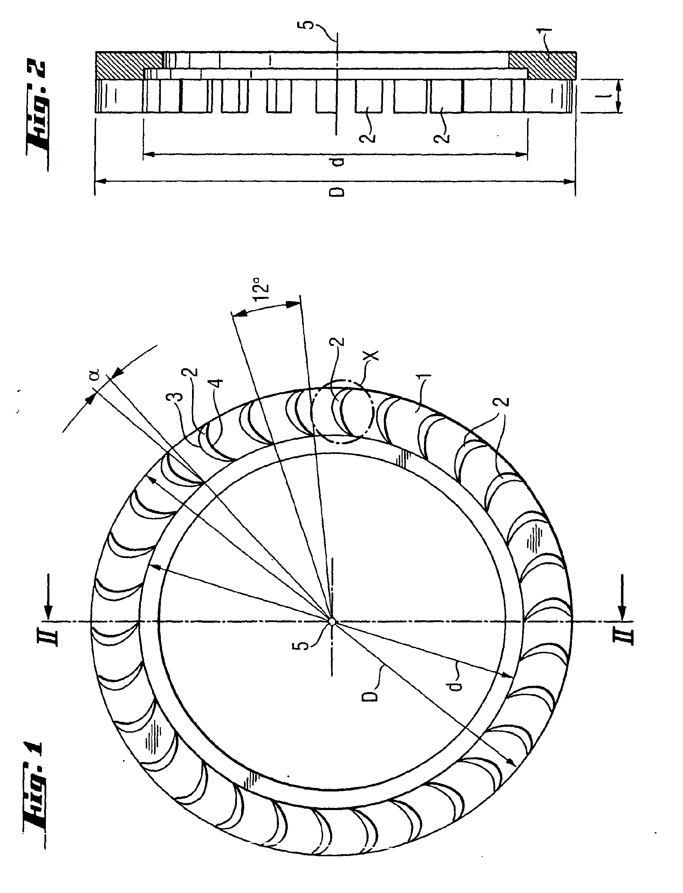

Man erkennt in Figur 1 ein Turbinenrad mit einer kreisscheibenförmigen Trägerplatte 1, welche einen Außendurchmesser D aufweist. Am äußeren Rand der Trägerplatte 1 befindet sich ein Kranz aus Turbinenschaufeln 2, wobei die äußeren Kanten der Turbinenschaufeln 2 in etwa auf dem Durchmesser D liegen, während die inneren Kanten des Schaufelradkranzes einen Durchmesser d definieren, wie man ebenfalls in Figur 2 erkennt. Konkret liegen die Werte für d zwischen 40 und 44 mm und die Werte für D zwischen etwa 50 und 60 mm, wobei die Differenz D-d etwa 20% von D ausmacht. Für die entsprechenden Radien gelten jeweils die halben Werte.

Wie man außerdem in Figur 1 erkennt, sind die einzelnen Schaufeln gegenüber der Radialrichtung um einen Winkel α nach vorn verkippt, das heißt in der Weise, daß die äußere Kante einer Turbinenschaufel der inneren Kante in Rotationsrichtung R etwas voranläuft. Konkret beträgt der Winkel α, das heißt der Winkel einer Verbindungslinie von Außenkante und Innenkante einer Schaufel zu dem Radiusvektor auf die Innenkante der Schaufel etwa 8° ± 1°.

Der Teilungswinkel zwischen den Schaufeln beträgt 12°, das heißt über den Umfang sind insgesamt 30 Turbinenschaufeln 2 verteilt. Anstelle einer Kreisscheibe könnte das Turbinenrad 1 selbstverständlich auch aus einem Ring mit Speichen und entlang des Ringes angeordneten Turbinenschaufeln 2 bestehen.

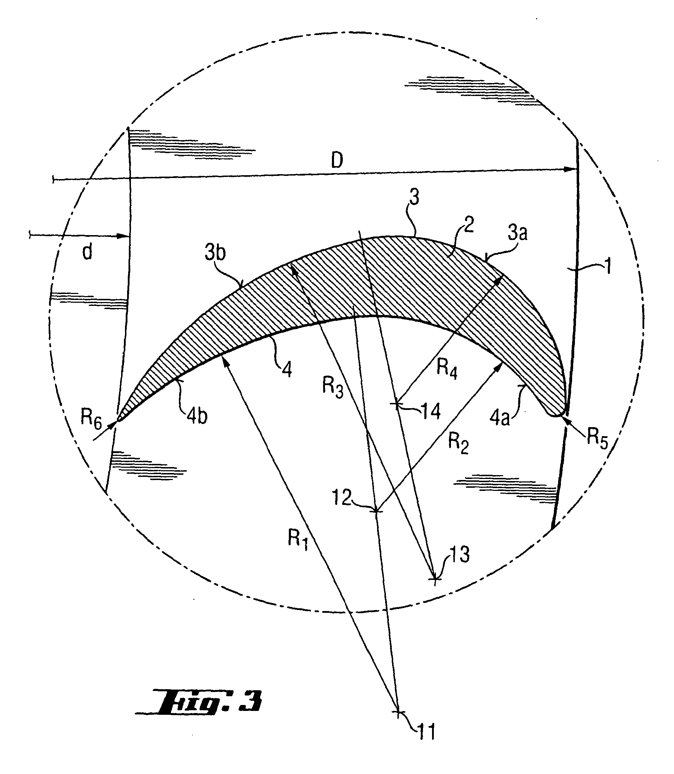

In Figur 3 erkennt man einen Ausschnitt aus der Trägerplatte 1 eines Turbinenrades mit einer einzelnen Turbinenschaufel 2, die im Querschnitt dargestellt ist. Die Turbinenschaufel 2 hat eine gekrümmte Vorderfläche 3 und eine ebenfalls gekrümmte Rückfläche 4, wobei die Vorderfläche ihrerseits aus einem radial äußeren Abschnitt 3a und einem radial inneren Abschnitt 3b besteht, während die Rückfläche 4 aus einem radial äußeren Abschnitt 4a und einem radial inneren Abschnitt 4b besteht. In axialer Richtung ist das Profil der Turbinenschaufel 2 konstant, das Heißt, die Vorderfläche 3 und die Rückfläche 4 verlaufen achsparallel.

Der Übergang von der Vorderfläche zur Rückfläche an der inneren Kante und der äußeren Kante der Turbinenschaufel 2 erfolgt außen über einen Krümmungsradius R₅ von etwa 0,15 mm oder auch etwas kleiner und im Bereich der inneren Kante über einen Krümmungsradius R₆, der deutlich unter 0,1 mm liegt, beispielsweise bei etwa 0,025 mm.

Die radial inneren und äußeren Abschnitte 3a, 3b der Vorderfläche und auch die entsprechenden radial inneren und äußeren Abschnitte 4a, 4b der rückwärtigen Fläche 4 haben jeweils unterschiedliche Krümmungsradien und auch unterschiedlich angeordnete Krümmungszentren. Der radial innere Abschnitt 4b der rückwärtigen Fläche 4 hat einen Krümmungsradius R₁ und ein Krümmungszentrum 11. Dieses Krümmungszentrum 11 liegt bei der auf dem Turbinenrad montierten 1-urbinenschaufei 2 etwas mehr an der Achse 5 des Turbinenrades als das Krümmungszentrum 13 des radial inneren Abschnittes 3b der Vorderfläche 3, der einen Krümmungsradius R₃ hat. Das Krümmungszentrum 11 liegt dabei radial weiter außerhalb (bezogen auf die Turbinenachse 5) als das Krümmungszentrum 12 des radial äußeren Abschnittes 4a der Rückfläche, die einen Krümmungsradius R₂ aufweist.

Der Krümmungsmittelpunkt 14 des radial äußeren Abschnittes 3a der Vorderfläche 3 liegt wiederum näher an der Turbinenachse als das Krümmungszentrum 13 des radial inneren Abschnittes der Vorderfläche 3, aber geringfügig weiter von der Achse 5 der Turbine entfernt als das Krümmungszentrum 12 des radial äußeren Abschnittes 4a der Rückfläche 4.

Insgesamt gilt für die 4 Krümmungsradien der Vorder- und Rückflächen in der bevorzugten Ausführungsform der Erfindung die Beziehung: R₄ < R₂ < R₃ < R₁, wobei der Faktor zwischen R₂ und R₄ etwa 1,3 beträgt, der Faktor zwischen R₃ und R₂ etwa 2 beträgt und der Faktor zwischen R₁ und R₃ etwa 1,1 beträgt. Diese Faktoren können jedoch auch ohne weiteres um 10% in beide Richtungen variieren.

Der Übergang zwischen dem Abschnitt 3a und dem Abschnitt 3b auf der Vorderfläche 3 liegt genau auf der Schnittlinie dieser Vorderfläche 3 mit einer die Krümmungszentren 13 und 14 verbindenden Geraden. Der Übergang zwischen den Abschnitten 4a und 4b der rückwärtigen Fläche 4 liegt auf dem Schnittpunkt dieser rückwärtigen Fläche 4 mit einer Geraden durch die Krümmungszentren 11, 12 dieser beiden Abschnitte. Hierdurch wird sichergestellt, daß der Übergang zwischen den verschiedenen Radien glatt und ohne jeden Knick erfolgt, da die Tangenten der jeweils verschieden gekrümmten Abschnitte in den so definierten Übergangspunkten exakt zusammenfallen.

Wie man im übrigen aus den Figuren 1 und 2 ableiten kann, die exakt im selben Maßstab dargestellt sind, beträgt die Länge l der Turbinenschaufel 2 im Verhältnis zu ihrer radialen Erstreckung, das heißt im Verhältnis zu der Differenz zwischen Außenradius und Innenradius des Schaufelkranzes, etwa 68% (zwischen 65 und 70%). Neben dem speziellen Profil und der speziellen Anordnung der Turbinenschaufeln auf dem Turbinenrad trägt auch diese größere axiale Länge im Verhältnis zur radialen Erstreckung der Schaufeln zu einer verbesserten und stabilen Turbinenleistung und zu einem höheren Drehmoment bei hohen Drehzahlen bei.

Mit dem erfindungsgemäßen Turbinenrad gelingt es, im Vergleich zu einem herkömmlichen Turbinenrad mit den gleichen äußeren Abmessungen, in einer Lacksprüheinrichtung eine um ca. 100% höhere Sprühleistung bei gleicher Qualität zu erzielen.

Gleichzeitig ist die Herstellung des Turbinenrades durch die neue Gestaltung und Anordnung der Turbinenschaufeln praktisch nicht oder nur unwesentlich erschwert worden. Da die Turbinenschaufeln aus entsprechend längeren Profilen einfach durch Abtrennen von Abschnitten gewünschter Länge (die der axialen Länge l der Turbinenschaufeln entspricht) hergestellt werden, erfordert die Herstellung des neuen Schaufelprofils keinen wesentlich höheren Aufwand, da das Profil über die große Länge entsprechender vorgefertigter Profilelemente konstant ist. Auch das leicht verkippte Anordnen der Schaufeln verlangt keinen erhöhten Montage- bzw. Fertigungsaufwand. Dies gilt weiterhin auch für die vergrößerte axiale Länge der Schaufeln.

Durch die drastisch erhöhte Leistung des Turbinenrades wird der nur geringfügig erhöhte Aufwand beim Herstellen eines entsprechenden Turbinenrades bei weitem überkompensiert.

## Patentansprüche

1. Turbinenrad zum Antrieb schnell rotierender Werkzeuge, insbesondere für die rotierenden Teller und/oder Glocken von Farbsprüheinrichtungen, mit einer um eine Achse (5) drehbar gelagerten kreisscheiben- oder ringförmigen Trägerplatte (1) und darauf kreisförmig angeordneten Turbinenschaufeln (2), die achsparallele Vorderflächen (3) und Rückflächen (4) aufweisen und die in radialer Richtung, das heißt in Richtung senkrecht zu der Achse (5), gekrümmt verlaufen, wobei die Vorderfläche (3) einer Turbinenschaufel (2) mindestens abschnittsweise einen kleineren Krümmungsradius (R₃, R₄) hat als ein entsprechender Abschnitt der Rückfläche (4) **dadurch gekennzeichnet, daß** die radial äußeren Abschnitte (3a, 4a) der Vorderfläche (3) und auch der Rückfläche (4) der Turbinenschaufel (2) einen kleineren Krümmungsradius (R₄, R₂) haben als die entsprechenden radial weiter innen liegenden Abschnitte (3b, 4b), wobei die radial inneren Abschnitte (3b, 4b) der Vorderflächen (3) bzw. der Rückflächen (4) mindestens 30% der radialen Erstreckung einer Turbinenschaufel (2) erfassen, und die radial äußeren Abschnitte (3a, 4a) der Vorderflächen (3) bzw. Rückflächen (4) ebenfalls mindestens 30% der radialen Erstreckung der Turbinenschaufeln (2) erfassen und wobei die axiale Länge der Turbinenschaufeln (2) mindestens 60% der radialen Erstreckung der Turbinenschaufeln (2) beiträgt,

2. Turbinenrad nach Anspruch 1, **dadurch gekennzeichnet, daß** die radial inneren Abschnitte (3b) der Vorderflächen (3) der Turbinenschaufeln (2) einen größeren Krümmungsradius (R₃) haben als die radial äußeren Abschnitte (4a) der Rückfläche (4).

3. Turbinenrad nach einem der Ansprüche 1 oder 2, **dadurch gekennzeichnet, daß** die Krümmungsradien (R₃, R₁) der radial inneren Abschnitte (3b bzw. 4b) um mindestens 50%, vorzugsweise um mindestens 100% größer sind als die Krümmungsradien (R₄, R₂) der entsprechenden radial äußeren Abschnitte (3a bzw. 4a) der Vorderflächen (3) bzw. Rückflächen (4).

4. Turbinenrad nach einem der Ansprüche 1 bis 3, **dadurch gekennzeichnet, daß** der Krümmungsradius (R₃, R₁) eines radial inneren Abschnittes (3b, 4b) maximal das Vierfache des Krümmungsradius (R₄, R₂) des entsprechenden radial äußeren Abschnittes (3a, 4a) beträgt.

5. Turbinenrad nach einem der Ansprüche 1 bis 4, **dadurch gekennzeichnet, daß** der Krümmungsradius (R₂) des radial äußeren Abschnittes der Rückfläche (4) zwischen 5 und 50% größer ist als der Krümmungsradius (R₄) des radial äußeren Abschnittes (3a) der Vorderfläche (3).

6. Turbinenrad nach einem der Ansprüche 1 bis 5, **dadurch gekennzeichnet, daß** der Krümmungsradius (R₁) des radial inneren Abschnittes (4b) der Rückfläche (4) von dem Krümmungsradius (R₃) des radial inneren Abschnittes (3b) der Vorderfläche (3) um 0 bis 10% abweicht.

7. Turbinenrad nach einem der Ansprüche 1 bis 6, **dadurch gekennzeichnet, daß** die Vorderfläche (3) und die Rückfläche (4) jeweils im wesentlichen zwei verschiedene Krümmungsradien haben, wobei die unterschiedlichen Krümmungsabschnitte (3a, 3b bzw. 4a, 4b) glatt, das heißt mit einer stetigen ersten Ableitung, ineinander übergehen.

8. Turbinenrad nach einem der Ansprüche 1 bis 7, **dadurch gekennzeichnet, daß** die axiale Länge der Turbinenschaufeln (2) mindestens 65% der radialen Erstreckung der Turbinenschaufeln (2) beträgt.

9. Turbinenrad nach einem der Ansprüche 1 bis 8, **dadurch gekennzeichnet, daß** die axiale Länge der Turbinenschaufeln (2) höchstens 100%, vorzugsweise höchstens 80%, der radialen Erstreckung der Schaufeln (2) beträgt.

10. Turbinenrad nach den Ansprüchen 8 und 9, **dadurch gekennzeichnet, daß** die axiale Länge der Turbinenschaufeln (2) etwa 70% ± 5% der radialen Erstreckung der Turbinenschaufeln (2) beträgt.

11. Turbinenrad nach einem der Ansprüche 1 bis 10, **dadurch gekennzeichnet, daß** in einem Schnitt senkrecht zur Turbinenachse die Verbindungslinie der radial inneren und der radial äußeren Kante einer Turbinenschaufel gegenüber einem Radiusvektor auf die Innenkante der Turbinenschaufel geneigt verläuft, und zwar in der Weise, daß die äußere Kante der Turbinenschaufel der inneren Kante in Rotationsrichtung voraneilt, wobei die Verbindungslinie gegenüber dem auf die innere Kante der Turbinenschaufel (2) weisenden Radiusvektor um 2 bis 15°, vorzugsweise um 5 bis 12° und insbesondere um etwa 8° ± 1 ° geneigt ist.

12. Turbinenrad nach einem der Ansprüche 1 bis 11, **dadurch gekennzeichnet, daß** die innere und die äußere Kante der Turbinenschaufeln mit jeweils einem kleinen Radius abgerundet sind, wobei der Rundungsradius (R₆) der inneren Kante kleiner als 0,1 mm, vorzugsweise kleiner als 0,05 mm und größer als 0,01 mm ist und der Rundungsradius (R₅) der äußeren Kante kleiner als 0,3, vorzugsweise kleiner als 0,2 mm aber größer als 0,1 mm ist.

13. Turbinenrad nach einem der Ansprüche 1 bis 12, **dadurch gekennzeichnet, daß** die Teilung der Turbinenschaufel (2) in Umfangsrichtung zwischen 10° und 15°, vorzugsweise 12° beträgt.

14. Turbinenrad nach einem der Ansprüche 1 bis 13, **dadurch gekennzeichnet, daß** der Innenradius des Schaufelkranzes zwischen 20 und 24, vorzugsweise etwa 22 mm beträgt.

15. Turbinenrad nach einem der Ansprüche 1 bis 14, **dadurch gekennzeichnet, daß** der Außenradius des Schaufelkranzes zwischen 25 und 60 mm, insbesondere etwa 27,5 mm beträgt.

16. Turbinenrad nach einem der Ansprüche 1 bis 15, **dadurch gekennzeichnet, daß** der Winkelbereich, über welchen der radial innere Abschnitt (4b) der Schaufelrückseite (4) sich erstreckt, zwischen 28° und 40°, insbesondere zwischen 30 und 35° liegt und der Winkelbereich, über welchen der radial äußere Abschnitt (4a) der Rückseite der Turbinenschaufel (2) sich erstreckt, zwischen 60 und 90°, insbesondere zwischen 70° ± 5° liegt, jeweils bezogen auf den Krümmungsmittelpunkt (11, 12) der entsprechenden Abschnitte.

17. Turbinenrad nach einem der Ansprüche 1 bis 16, **dadurch gekennzeichnet, daß** der Winkelbereich, über welchen der radial innere Abschnitt (3b) der Vorderseite (3) der Turbinenschaufel (2) sich erstreckt, in einem Winkelbereich zwischen 35 und 45°, insbesondere bei 40° ± 2° liegt, und daß der Winkelbereich, über welchen der radial äußere Abschnitt (3a) der Vorderseite (3) der Turbinenschaufel (2) sich erstreckt, zwischen 100 und 130°, insbesondere bei 115° ± 5° liegt, jeweils bezogen auf den Krümmungsmittelpunkt (13, 14) der entsprechenden Abschnitte.

18. Turbinenrad nach einem der Ansprüche 1 bis 17, **dadurch gekennzeichnet, daß** der Übergang der Krümmungsradien vom radial inneren zum radial äußeren Abschnitt jeweils auf der Verbindungslinie der Krümmungsmittelpunkte (11, 12 bzw. 13, 14) des entsprechenden radial inneren und radial äußeren Abschnittes liegt.

## Claims

1. Turbine wheel for driving rapidly rotating tools, particularly for the rotating disks and/or domes of paint-spraying apparatus, with a carrier plate (1), in the form of a circular disk or ring, mounted so as to be rotatable about an axis (5), and, disposed thereon in circular formation, turbine blades (2) which have axially parallel front faces (3) and back faces (4) and which are curved in the radial direction, i.e., in the direction perpendicular to the axis (5), the front face (3) of a turbine blade (2) having a lesser radius of curvature (R₃, R₄), at least in portions, than an appropriate portion of the back face (4), **characterized in that** the radially outer portions (3a, 4a) of the front face (3) and also of the back face (4) of the turbine blade (2) have a lesser radius of curvature (R₄, R₂) than the appropriate radially more inward portions (3b, 4b) wherein the radially inner portions (3b, 4b) of the front faces (3) and of the back faces (4) respectively comprise at least 30% of the radial extent of a turbine blade (2), and the radially outer portions (3a, 4a) of the front faces (3) and back faces (4) respectively likewise comprise at least 30% of the radial extent of the turbine blades (2) wherein the axial length of the turbine blades (2) is at least 60% of the radial extent of the turbine blades.

2. Turbine wheel according to Claim 1, **characterized in that** the radially inner portions (3b) of the front faces (3) of the turbine blades (2) have a greater radius of curvature (R₃) than the radially outer portions (4a) of the back face (4).

3. Turbine wheel according to one of Claims 1 or 2, **characterized in that** the radii of curvature (R₃, R₁) of the radially inner portions (3b and 4b respectively) are at least 50%, preferably 100%, greater than the radii of curvature (R₄, R₂) of the corresponding radially outer portions (3a and 4a respectively) of the front faces (3) and back faces (4) respectively.

4. Turbine wheel according to one of Claims 1 to 3, **characterized in that** the radius of curvature (R₃, R₁) of a radially inner portion (3b, 4b) is maximally the quadruple of the radius of curvature (R₄, R₂) of the corresponding radially outer portion (3a, 4a).

5. Turbine wheel according to one of Claims 1 to 4, **characterized in that** the radius of curvature (R₂) of the radially outer portion of the back face (4) is between 5% and 50% greater than the radius of curvature (R₄) of the radially outer portion (3a) of the front face (3).

6. Turbine wheel according to one of Claims 1 to 5, **characterized in that** the radius of curvature (R₁) of the radially inner portion (4b) of the back face (4) differs from the radius of curvature (R₃) of the radially inner portion (3b) of the front face (3).by 0 to 10%.

7. Turbine wheel according to one of Claims 1 to 6, **characterized in that** the front face (3) and the back face (4) respectively have essentially two different radii of curvature, the different curvature portions (3a, 3b and 4a, 4b respectively) merging smoothly into one another, i.e., with a continuous first derivative.

8. Turbine wheel according to one of Claims 1 to 7, **characterized in that** the axial length of the turbine blades (2) is at least 65%, of the radial extent of the turbine blades (2).

9. Turbine wheel according to one of Claims 1 to 8, **characterized in that** the axial length of the turbine blades (2) is at most 100%, preferably at most 80%, of the radial extent of the blades (2).

10. Turbine wheel according to Claims 8 and 9, **characterized in that** the axial length of the turbine blades (2) is approximately 70% ± 5% of the radial extent of the turbine blades (2).

11. Turbine wheel according to one of Claims 1 to 10, **characterized in that**, in a section perpendicular to the turbine axis, the connecting line of the radially inner and of the radially outer edge of a turbine blade is inclined relative to a radius vector to the inner edge of the turbine blade, this being such that the outer edge of the turbine blade is ahead of the inner edge in the direction of rotation, the connecting line being inclined by 2° to 15°, preferably by 5° to 12°, and, in particular, by approximately 8° ± 1°, relative to the radius vector directed towards the inner edge of the turbine blade (2).

12. Turbine wheel according to one of Claims 1 to 11, **characterized in that** the inner and the outer edge of the turbine blades are respectively rounded off with a small radius, the rounding radius (R₆) of the inner edge being less than 0.1 mm, preferably less than 0.05 mm, and greater than 0.01 mm, and the rounding radius (R₅) of the outer edge being less than 0.3, preferably less than 0.2 mm, but greater than 0.1 mm.

13. Turbine wheel according to one of Claims 1 to 12, **characterized in that** the pitch of the turbine blades (2) in the circumferential direction is between 10° and 15°, preferably 12°.

14. Turbine wheel according to one of Claims 1 to 13, **characterized in that** the internal radius of the blade ring is between 20 and 24, preferably approximately 22 mm.

15. Turbine wheel according to one of Claims 1 to 14, **characterized in that** the external radius of the blade ring is between 25 and 60 mm, in particular, approximately 27.5 mm.

16. Turbine wheel according to one of Claims 1 to 15, **characterized in that** the angular range over which the radially inner portion (4b) of the back side (4) of the blade extends is between 28° and 40°, in particular, between 30° and 35°, and the angular range over which the radially outer portion (4a) of the back side of the turbine blade (2) extends is between 60° and 90°, in particular, between 70° ± 5°, in each case relative to the centre of curvature (11, 12) of the respective portions.

17. Turbine wheel according to one of Claims 1 to 16, **characterized in that** the angular range over which the radially inner portion (3b) of the front face (3) of the turbine blade (2) extends is in an angular range between 35° and 45°, in particular, is 40° ± 2°, and the angular range over which the radially outer portion (3a) of the front face (3) of the turbine blade (2) extends is between 100° and 130°, in particular, is 115° ± 5°, in each case relative to the centre of curvature (13, 14) of the respective portions.

18. Turbine wheel according to one of Claims 1 to 17, **characterized in that** the transition of the radii of curvature from the radially inner to the radially outer portion is in each case located on the connecting line of the centres of curvature (11, 12 and 13, 14 respectively) of the respective radially inner and radially outer portion.

## Revendications

1. Roue de turbine pour entraîner des outils à rotation rapide, en particulier, pour les disques en rotation et/ou les cloches appartenant aux dispositifs de pulvérisation d'un agent colorant, avec un disque circulaire monté de façon à pouvoir tourner autour d'un axe - ou de plaques supports annulaires (1) et des aubes de turbines (2) agencées de façon circulaire qui présentent des surfaces avant (3) et des surfaces arrière (4) parallèles à l'axe et qui s'étendent de manière incurvée dans la direction radiale, c'est-à-dire dans la direction perpendiculaire à l'axe (5), les surfaces avant (3) d'une aube de turbine (2) ayant au moins, par endroits, un plus petit rayon de courbure (R₃, R₄) qu'une section correspondante de la surface arrière (4), **caractérisée en ce que** les sections radiales externes (3a, 4a) de la surface avant (3) et aussi de la surface arrière (4) de l'aube de turbine (2) ont un plus petit rayon de courbure (R₄, R₂) que les sections correspondantes radialement plus éloignées vers l'intérieur (3b, 4b), les sections radiales internes (3b, 4b) des surfaces avant (3) ou des surfaces arrière (4) couvrant au moins 30 % de l'extension radiale d'une aube de turbine (2) et les sections radiales externes (3a, 4a) des surfaces avant (3) ou des surfaces arrière (4) couvrant également au moins 30 % de l'extension radiale des aubes de turbine (2) et les longueurs axiales des aubes de turbine (2) comprenant au moins 60 % de l'extension radiale des aubes de turbine (2).

2. Roue de turbine selon la revendication 1, **caractérisée en ce que** les sections radiales internes (3b) des surfaces avant (3) des aubes de turbine (2), ont un rayon de courbure (R₃) supérieur aux sections radiales externes (4a) de la surface arrière (4).

3. Roue de turbine, selon l'une des revendications 1 ou 2, **caractérisée en ce que** les rayons de courbure (R₃, R₁) des sections radiales internes (3b ou 4 b) sont supérieures d'au moins 50 %, de préférence d'au moins 100 %, aux rayons de courbure (R₄, R₂) des sections radiales externes correspondantes (3a ou 4a), des surfaces avant (3) ou surfaces arrière (4).

4. Roue de turbine selon l'une des revendications 1 à 3, **caractérisée en ce que** le rayon de courbure (R₃, R₁) d'une section radiale interne (3b, 4b) comprend au maximum quatre fois le rayon de courbure (R₄, R₂) de la section radiale externe correspondante (3a, 4a).

5. Roue de turbine selon l'une des revendications 1 à 4, **caractérisée en ce que** le rayon de courbure (R₂) de la section radiale externe de la surface arrière (4) est supérieur de 5 à 50 % au rayon de courbure (R₄) de la section radiale externe (3a) de la surface avant (3).

6. Roue de turbine selon l'une des revendications 1 à 5, **caractérisée en ce que** le rayon de courbure (R₁) de la section radiale interne (4b) de la surface arrière (4) du rayon de courbure (R₃) de la section radiale interne (3b) de la surface avant (3) s'écarte de 0 à 10 %.

7. Roue de turbine selon l'une des revendications 1 à 6, **caractérisée en ce que** la surface avant (3) et la surface arrière (4) ont respectivement deux rayons de courbure sensiblement différents, les sections de courbure différentes (3a, 3b, ou 4a, 4b) passant les unes au-dessus des autres sans à-coups, c'est-à-dire avec une première dérivation en continue.

8. Roue de turbine selon l'une des revendications 1 à 7, **caractérisée en ce que** la longueur axiale des aubes de turbine (2) comprend au moins 65 % de l'extension radiale des aubes de turbine (2).

9. Roue de turbine selon l'une des revendications 1 à 8, **caractérisée en ce que** la longueur axiale des aubes de turbine (2) comprend au maximum 100 %, de préférence au maximum 80 %, de l'extension radiale des aubes (2).

10. Roue de turbine selon l'une des revendications 8 et 9, **caractérisée en ce que** la longueur axiale des aubes de turbine (2) comprend environ 70 % ± 5 % de l'extension radiale des aubes de turbine (2).

11. Roue de turbine selon l'une des revendications 1 à 10, **caractérisée en ce que**, dans une section perpendiculaire à l'axe de turbine la ligne de liaison du bord radial interne et radial externe d'une aube de turbine s'étend de façon inclinée contre un rayon vecteur sur le bord interne de l'aube de turbine, et de sorte que le bord externe de l'aube de turbine précède, dans la direction de rotation, le bord interne, la ligne de liaison étant inclinée contre le rayon vecteur pointant sur le bord interne de l'aube de turbine (2) de 2 à 15°, de préférence de 5 à 12° et idéalement d'environ 8° ± 1°.

12. Roue de turbine selon l'une des revendications 1 à 11, **caractérisée en ce que** le bord interne et le bord externe des aubes de turbine sont arrondis avec respectivement un petit rayon, le rayon d'arrondi (R₆) du bord interne étant inférieur à 0,1 mm, de préférence inférieur à 0,05 mm et supérieur à 0,01 mm et le rayon d'arrondi (R₅) du bord externe étant inférieur à 0,3 mm, de préférence inférieur à 0,2 mm mais supérieur à 0,1 mm.

13. Roue de turbine selon l'une des revendications 1 à 12, **caractérisée en ce que** la séparation de l'aube de turbine (2) est comprise dans une direction périphérique entre 10° et 15°, et est de préférence de 12°.

14. Roue de turbine selon l'une des revendications 1 à 13, **caractérisée en ce que** le rayon interne de la couronne d'aube est compris entre 20 et 24 mm et est de préférence d'environ 22 mm.

15. Roue de turbine selon l'une des revendications 1 à 14, **caractérisée en ce que** le rayon externe de la couronne d'aube est compris entre 25 et 60 mm et est en particulier d'environ 27,5 mm.

16. Roue de turbine selon l'une des revendications 1 à 15, **caractérisée en ce que** la zone angulaire sur laquelle la section radiale interne (4b) de la face arrière de l'aube (4) s'étend, est située entre 28° et 40°, en particulier entre 30° et 35°, et **en ce que** la zone angulaire sur laquelle la section radiale externe (4a) de la face arrière de l'aube de turbine (2) s'étend, est située entre 60° et 90°, en particulier aux environs de 70° ± 5°, respectivement par rapport au centre de courbure (11, 12) des sections correspondantes.

17. Roue de turbine selon l'une des revendications 1 à 16, **caractérisée en ce que** la zone angulaire, sur laquelle la section radiale interne (3b) de la face avant (3) de l'aube de turbine (2) s'étend, est située dans une zone angulaire entre 35° et 45°, en particulier aux environs de 40° ± 2° et **en ce que** la zone angulaire sur laquelle la section radiale externe (3a) de la face avant (3) de l'aube de turbine (2) s'étend, est située entre 100° et 130°, en particulier aux environs de 115° ± 5°, respectivement par rapport au centre de courbure (13, 14), des sections correspondantes.

18. Roue de turbine selon l'une des revendications 1 à 17, **caractérisée en ce que** la zone de transition des rayons de courbure de la section radiale interne à la section radiale externe est située respectivement sur la ligne de liaison du centre de courbure (11, 12 ou 13, 14) de la section radiale interne et radiale externe correspondante.
